# EUROPÄISCHE PATENTSCHRIFT

(11) **EP 3 573 932 B1**
(45) Veröffentlichungstag und Bekanntmachung des Hinweises auf die Patenterteilung: **16.09.2020**
(21) Anmeldenummer: 18701412.1
(22) Anmeldetag: 11.01.2018
(51) Int. Cl.: C03B 29/08, C03B 23/023, C03B 35/20

(54) **VERFAHREN ZUM BIEGEN EINER GLASSCHEIBE**
METHOD FOR BENDING A GLASS PANE
PROCÉDÉ DESTINÉ AU PLIAGE D'UNE VITRE

(30) Priorität: 30.01.2017 EP 17153726
(43) Veröffentlichungstag der Anmeldung: 04.12.2019
(73) Patentinhaber: SAINT-GOBAIN GLASS FRANCE, 92400 Courbevoie (FR)
(72) Erfinder: KRONHARDT, Heinrich, 52372 Kreuzau (DE); SCHULZ, Valentin, 52382 Niederzier (DE)
(74) Vertreter: Weber, Sophie
(86) Internationale Anmeldenummer: PCT/EP2018/050620
(87) Internationale Veröffentlichungsnummer: WO 2018/137931

(56) Entgegenhaltungen:
- DE-A1- 19 714 360
- DE-B3-102005 001 513
- DE-C1- 4 438 261
- GB-A- 1 299 384
- JP-A- S57 140 325
- US-A- 4 973 348
- US-B1- 6 240 746
- DATABASE WPI Week 198728 14. März 1981 (1981-03-14) Thomson Scientific, London, GB; AN 1987-196620 XP002774481, -& JP S56 26734 A (CENTRAL GLASS CO LTD) 14. März 1981 (1981-03-14)
- DATABASE WPI Week 201630 18. April 2016 (2016-04-18) Thomson Scientific, London, GB; AN 2016-25315N XP002774345, -& KR 2016 0041718 A (DAEHO TECHNOLOGY CO LTD) 18. April 2016 (2016-04-18)

## Beschreibung

Die Erfindung betrifft ein Verfahren und eine Vorrichtung zum Biegen einer Glasscheibe.

### Hintergrund der Erfindung

In der gegenwärtigen Praxis finden sich - insbesondere im Fahrzeugbau - Glasscheiben, die nicht flach sind, sondern Biegungen in unterschiedlichsten Ausformungen aufweisen.

Ohne Beschränkung der Allgemeinheit wird im nachfolgenden Bezug auf Glasscheiben genommen, wobei dieser Begriff nicht limitierend zu verstehen ist, sondern auch z.B. eine Vielzahl von Glasscheiben betreffen kann, wie sie z.B. bei der Produktion von Verbundglasscheiben zu finden sind.

Typischerweise werden gebogene Glasscheiben dadurch hergestellt, dass eine Glasscheibe auf eine geeignete Halterung angebracht wird und - z.B. auf 650° C - erwärmt wird, sodass die Glasscheibe unter Einfluss der Schwerkraft und/oder durch Formgebung, wie z.B. Pressen, Ziehen, Saugen in die gewünschte Form gebracht wird. Anschließend wird die nunmehr gebogene Glasscheibe wieder abgekühlt und von der Halterung abgenommen.

Ohne Beschränkung der Allgemeinheit können dabei weitere Schritte davor, dazwischen und danach vorgesehen sein, z.B. kann es notwendig sein, mehrmals eine Scheibe in unterschiedliche Richtungen zu biegen, um eine gewünschte Form zu erreichen. Dabei kann es auch vorgehen sein, dass die Scheibe mehrmals erwärmt wird. D.h., im nachfolgenden wird der Begriff des Ofens weit verstanden und umfasst jegliche Anordnung, die geeignet ist, eine Glasscheibe auf eine Temperatur von 180° C oder mehr, z.B. 650° C, zu bringen oder zu halten. Dabei kann unter Ofen der gesamte thermische Biegeprozess verstanden werden.

Nach dem Abnehmen der Glasscheibe von der Halterung kann die Halterung erneut verwendet werden.

Hierdurch kann eine massenhafte Fertigung von gebogenen Glasscheiben ermöglicht werden.

Dabei können in einer Fertigungsstraße auch mehrere Glasscheiben auf jeweiligen Halterungen sich gleichzeitig in einem Ofen - z.B. in unterschiedlichen Verfahrensschritten - befinden.

Beispielhaft sei hierbei auf die Internationale Patentanmeldung PCT/EP2011/072492 der Anmelderin verwiesen, die in Figur 1 eine schematische Darstellung eines beispielhaften herkömmlichen Fertigungsprozesses darstellt.

Allerdings stellen sich die bisherige Fertigungsweise und die bisherigen Einrichtungen als nachteilig heraus.

So hat sich gezeigt, dass ein großer Teil - z.B. 20 % - der eingesetzten Wärmeleistung des Ofens dafür verwendet werden muss, die Halterung(en) auf die gewünschte Temperatur aufzuheizen, denn typischerweise sinkt die Temperatur der Halterungen von der Abnahme einer gebogenen Glasscheibe bis zur Wiederverwendung ab.

Hierdurch entstehen hohe Betriebskosten, die es zu vermeiden gilt.

Weiterhin hat sich gezeigt, dass die Qualität der Biegung stark schwankt. Dabei machen sich z.B. Effekte der Wärmeausdehnung der Halterung bemerkbar. Da die Temperatur je nach Dauer bis zu einer Wiederverwendung einer Halterung absinkt, ergibt sich eine hohe Varianz der "Starttemperatur". Bei der anschließenden Erwärmung im Ofen dehnen sich die Halterung unterschiedlich aus. Da die Halterung auch kompliziertere Formen annimmt, sind die Wärmeleitung und damit die einhergehende Ausdehnung nur schwer vorauszusehen. Daher sind abhängig von der "Starttemperatur" und der Verweildauer im Ofen, als auch von der jeweiligen Ausgestaltung der Halterung, Verbindungsstellen an der Halterung, etc. die Ausdehnungen immer unterschiedlich. Zudem ändert sich der Temperaturverlauf für die Biegung, da nun abhängig von der "Starttemperatur" auch Wärmeenergie zur Aufheizung der Halterung verwendet wird.

Diese Varianzen beeinflussen aber auch das Ergebnis der Biegung und damit auch die Qualität der hergestellten gebogenen Glasscheiben. Weichen die Biegungen zu stark ab, so ist die Scheibe nicht verwendbar, da sie entweder nicht mehr einzubauen ist, oder aber negative optische Eigenschaften aufweist, oder aber Grenzwerte für eine Zulassung verletzt.

Aus der japanischen Patentanmeldung JP S56-26734 A ist eine Glasbiegevorrichtung mit einer Transporteinrichtung für Glas bekannt. Die Glasbiegevorrichtung verwendet ein zyklisches Verfahren zum Biegen von Glasscheiben in einem Ofen, wobei die Scheiben auf Halterungen durch den Ofen hindurch gefahren werden und die leeren Halterungen nach dem Entladen der gebogenen Scheiben durch einen Schacht, der oberhalb des Ofens angeordnet ist, wieder zum Ausgangspunkt zurückgeführt werden. Der Schacht wird durch heiße Abgase des Ofens beheizt, wodurch die leeren Halterungen erwärmt werden. Die Vorrichtung erfordert eine spezifische Anordnung, die zudem voluminös ist. Aus der Anordnung heraus, die ein Abströmen von heißen Abgasen erfordert, ergibt sich zudem ein Wärmeverlust.

Ausgehend von dieser Situation ist es eine Aufgabe der Erfindung eine Vorrichtung und ein Verfahren zur Verfügung zu stellen, das es erlaubt, gebogenen Glasscheiben kostengünstig und mit hoher Präzision bereitzustellen.

### Kurzdarstellung der Erfindung

Die Aufgabe wird gelöst durch ein Verfahren zum Biegen einer Glasscheibe in einem Ofen, wobei der Ofen einen Eingang und einen Ausgang aufweist. Das Verfahren weist einen Schritt des Bereitstellens einer Glasscheibe auf einer Halterung auf, wobei die Halterung vorgewärmt ist. Weiterhin weist das Verfahren den Schritt des Einbringens der gehalterten Glasscheibe in den Eingang des Ofens zum Biegen und den Schritt des Ausbringens der gebogenen, gehalterten Glasscheibe aus dem Ausgang des Ofens auf. In einem weiteren Schritt wird die gebogene, gehalterte Glasscheibe von der Halterung entnommen. Anschließend wird eine thermische Isolation auf der Halterung angebracht. Die Halterung und die thermische Isolation werden in einem weiteren Schritt mittels einer Transporteinrichtung rückgeführt. Dann wird vor einem erneuten Haltern die thermische Isolation entfernt, wobei die zuvor bezeichneten Schritte zyklisch erneut durchlaufen werden.

In einer Ausgestaltung des Verfahrens wird die Halterung zumindest zeitweise zwischen der Entnahme der gebogenen, gehalterten Glasscheibe von der Halterung und dem Einbringen der gehalterten Glasscheibe in den Eingang des Ofens geheizt. In einer weiteren Ausgestaltung des Verfahrens ist die thermische Isolation haubenartig ausgeführt und wird beim Anbringen der thermischen Isolation über die Halterung gestülpt.

Gemäß einer weiteren Ausgestaltung des Verfahrens wird die Halterung aus der Nachbarschaft des Ausgangs des Ofens in die Nachbarschaft des Eingangs des Ofens in weniger als 60 Sekunden transportiert.

Gemäß noch einer weiteren Ausgestaltung des Verfahrens wird zumindest zeitweise eine gesteuerte/geregelte oder eine ungesteuerte Heizung der Halterung zwischen der Entnahme der gebogenen, gehalterten Glasscheibe von der Halterung und dem Einbringen der bereitgestellten Glasscheibe in den Eingang des Ofens bereitgestellt.

In noch einer weiteren Ausgestaltung des Verfahrens beträgt die Temperatur der Halterung vor dem Eintritt in den Ofen 200° C und mehr beträgt.

Die Aufgabe wird weiterhin gelöst durch eine Vorrichtung zum Biegen einer Vielzahl von Glasscheiben mit einem Ofen, wobei der Ofen einen Eingang und einen Ausgang aufweist, wobei die Vorrichtung eine Transporteinrichtung zum Transport einer Halterung für eine Glasscheibe umfasst, sodass die Halterung auf der Transporteinrichtung zum Transport vom Ausgang des Ofens zum Eingang des Ofens vorgesehen ist, wobei weiterhin für die Halterung auf der Transporteinrichtung eine thermische Isolation vorgesehen ist.

In einer Ausgestaltung der Vorrichtung ist die thermische Isolation haubenartig ausgeführt.

Gemäß einer weiteren Ausgestaltung der Vorrichtung ist die Transporteinrichtung ein Förderband ist oder lineare Transportschlitten aufweist.

In einer weiteren Ausgestaltung der Vorrichtung ist die Transporteinrichtung geeignet eine Halterung aus der Nachbarschaft des Ausgangs des Ofens in die Nachbarschaft des Eingangs des Ofens in weniger als 60 Sekunden zu transportieren.

Gemäß noch einer weiteren Ausgestaltung der Vorrichtung ist eine Heizeinrichtung auf der Transporteinrichtung für die Halterung vorgesehen, die zumindest zeitweise eine gesteuerte/geregelte oder eine ungesteuerte Heizung der Halterung zwischen der Entnahme der gebogenen, gehalterten Glasscheibe von der Halterung und dem Einbringen der bereitgestellten Glasscheibe in den Eingang des Ofens aufweist.

In noch einer weiteren Ausgestaltung der Vorrichtung ist die Heizeinrichtung am unteren Ende der Halterung während des Transports mittels der Transporteinrichtung angeordnet ist.

Die Aufgabe wird weiterhin gelöst durch eine Vorrichtung zum Biegen einer Vielzahl von Glasscheiben mit einem Ofen, wobei der Ofen einen Eingang und einen Ausgang aufweist, wobei die Vorrichtung eine Transporteinrichtung zum Transport einer Halterung für eine Glasscheibe umfasst, sodass die Halterung auf der Transporteinrichtung zum Transport vom Ausgang des Ofens zum Eingang des Ofens vorgesehen ist, wobei die Transporteinrichtung ein Förderband oder lineare Transportschlitten aufweist.

In einer weiteren Ausgestaltung der Vorrichtung ist die Transporteinrichtung geeignet eine Halterung aus der Nachbarschaft des Ausgangs des Ofens in die Nachbarschaft des Eingangs des Ofens in weniger als 60 Sekunden zu transportieren.

Die Aufgabe wird weiterhin gelöst durch eine Vorrichtung zum Biegen einer Vielzahl von Glasscheiben mit einem Ofen, wobei der Ofen einen Eingang und einen Ausgang aufweist, wobei die Vorrichtung eine Transporteinrichtung zum Transport einer Halterung für eine Glasscheibe umfasst, sodass die Halterung auf der Transporteinrichtung zum Transport vom Ausgang des Ofens zum Eingang des Ofens vorgesehen ist, wobei weiterhin eine Heizeinrichtung für die Halterung auf der Transporteinrichtung vorgesehen ist, die zumindest zeitweise eine gesteuerte/geregelte oder eine ungesteuerte Heizung der Halterung zwischen der Entnahme der gebogenen, gehalterten Glasscheibe von der Halterung und dem Einbringen der bereitgestellten Glasscheibe in den Eingang des Ofens aufweist.

In einer weiteren Ausgestaltung der Vorrichtung ist die Heizeinrichtung am unteren Ende der Halterung während des Transports mittels der Transporteinrichtung angeordnet ist. Prinzipiell ist der Anordnung der Heizeinrichtung keine Grenze gesetzt, sodass auch eine seitliche Anordnung oder eine Anordnung am oberen Ende möglich ist.

Gemäß einer Ausgestaltung aller erfindungsgemäßen Vorrichtungen beträgt die Temperatur der Halterung vor dem Eintritt in den Ofen 200° C und mehr.

### Kurzdarstellung der Zeichnungen

Ausführungsformen der vorliegenden Erfindung werden in exemplarischer Weise mit Bezug auf die angehängten Zeichnungen beschrieben, in denen zeigt:
Fig. 1 schematisch eine Ausführungsform der Vorrichtung gemäß Erfindung, und
Fig. 2 schematisch einen Ablaufplan von Verfahrensschritten gemäß Ausführungsformen der Erfindung.

### Ausführliche Darstellung der Erfindung in Bezug auf die Zeichnungen

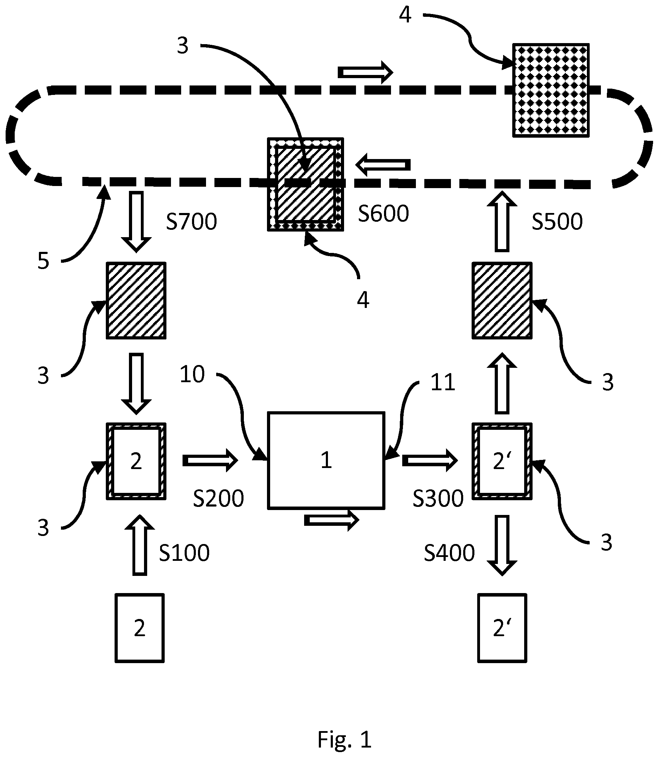

In Figur 1 ist schematisch eine Ausführungsform der Erfindung dargestellt, in der ein erfindungsgemäßes Verfahren verwendet werden kann. Dabei sind zur leichteren Orientierung einzelne Elemente mit gleichartigen Referenzzeichen und/oder Schraffuren dargestellt. Das Verfahren ist zum Biegen einer Glasscheibe 2 in einem Ofen 1 geeignet, wobei der Ofen einen Eingang 10 und einen Ausgang 11 aufweist. Die ungebogene Glasscheibe 2 als auch die gebogene Glasscheibe 2' werden als nicht-schraffiertes Rechteck dargestellt.

In einem ersten Schritt S100 wird mindestens eine Glasscheibe 2 auf einer Halterung 3 bereitgestellt, wobei die Halterung 3 vorgewärmt ist. Die Halterung 3 wird als schraffiertes Rechteck dargestellt. Vorgewärmt bedeutet in diesem Zusammenhang, dass die Halterung eine Temperatur von mehr als 180° C, insbesondere 200° C und mehr aufweist. Dabei kann die Erwärmung durch eine vorherige Benutzung und/oder durch eine aktive Beheizung bereitgestellt sein, wie nachfolgend weiter erläutert werden wird.

In einem weiteren Schritt S200 wird die gehalterte Glasscheibe 2 in den Eingang 10 des Ofens 1 zum Biegen eingebracht. Ohne Beschränkung der Allgemeinheit wird im nachfolgenden Bezug auf Glasscheiben genommen, wobei dieser Begriff nicht limitierend zu verstehen ist, sondern auch z.B. eine Vielzahl von Glasscheiben betreffen kann, wie sie z.B. bei der Produktion von Verbundglasscheiben zu finden sind.

Nach einer gewiesen Verweildauer im Ofen und dem Biegen wird die gebogene, gehalterte Glasscheibe 2' aus dem Ausgang 11 des Ofens 1 in Schritt S300 ausgebracht.

Anschließend kann unmittelbar oder aber nach einer Abkühlzeit die nunmehr gebogene, gehalterte Glasscheibe 2' von der Halterung 3 in Schritt S400 entnommen werden.

Die nunmehr unbenutzte Halterung 3 kann nun auf unterschiedliche Weise vor dem Abkühlen geschützt werden, wobei die unterschiedlichen Weisen sich nicht gegenseitig ausschließen, sondern in jeglicher Zusammenstellung verwendet werden können.

So ist es z.B. möglich in einem Schritt S500 eine thermische Isolation 4 auf der Halterung 3 anzubringen. Die thermische Isolation 4 wird als rautiertes Rechteck dargestellt. Hierdurch kann die natürliche Abstrahlung von Wärme reduziert werden, sodass die Halterung nach einer Rückführung zu Schritt S100 noch vorgewärmt im Sinne der Erfindung ist. Vorteilhafter Weise sollte eine solche passive Maßnahme so bald als möglich nach der Entnahme der Glasscheibe 2' von der Halterung 3 angewendet werden.

Parallel dazu oder im Anschluss dazu wird die Halterung 3 in Schritt S600 mittels einer Transporteinrichtung 5 rückgeführt. Die Transporteinrichtung 5 ist als dicke gestrichelte Linie dargestellt.

In einem weiteren Schritt S700 wird die thermische Isolation 4 vor einem erneuten Haltern in einem erneuten Schritt S100 entfernt.

Diese Schritte können in einer Produktionsstraße zyklisch erneut durchlaufen werden.

Das Anbringen der thermischen Isolation 4 verringert den Wärmeverlust. Somit verbleibt die Halterung 3 vorgewärmt und es wird weniger Heizleistung benötigt. Damit sinken die Herstellungskosten. Zudem wird durch die thermische Isolation 4 die Wärmeverteilung der Halterung 3 verbessert, sodass es zu geringeren Spannungen in der Halterung und somit auch eine verbesserte Qualität der gebogenen Glasscheiben 2' bereitgestellt werden kann. Insbesondere kann jedoch mit der vorgestellten Erfindung auch der notwendige Bauraum verkleinert werden, da nunmehr weniger Heizleistung zur Verfügung gestellt werden muss, bzw. Wärmeverluste verringert werden können. Mit der vorgestellten Maßnahme kann der Energieverbrauch um circa 10 % minimiert werden.

Die thermische Isolation 4 kann z.B. als eine Haube ausgeführt sein, die beim Anbringen (S500) der thermischen Isolation (4) über die Halterung 3 gestülpt wird. Je passgenauer diese Haube ausgeführt ist, desto geringer ist der Wärmeverlust. Diese Haube kann z.B. mittels einer Folie, wie sie aus Rettungsdecken bekannt ist, beschichtet sein. Weiterhin kann diese Haube Materialen wie z.B. Steinwolle, Glaswolle oder Ethylen-Propylen-Copolymer, Polyimid, silikonbeschichtetes Glasfibergewebe aufweisen, wobei die Temperatur der Halterung 3 vor dem Aufbringen der thermischen Isolation bzw. die Soll-Temperatur der Halterung 3 die Materialauswahl einschränken kann.

In einer Ausgestaltung der Erfindung, die alternativ oder zusätzlich zu Schritten S500 und S700, d.h. dem Anbringen und Entfernen einer thermischen Isolation ausgeführt werden kann, wird die Halterung 3 zumindest zeitweise zwischen der Entnahme S400 der gebogenen, gehalterten Glasscheibe 2' von der Halterung 3 und dem Einbringen S200 der gehalterten Glasscheibe 2 in den Eingang 10 des Ofens 1 geheizt.

Diese Heizung kann z.B. durch eine elektrische Widerstandsbeheizung oder durch verbrennendes Gas bereitgestellt werden. Beispielsweise kann mittels einer induktiven Kopplung elektrische Energie an die Halterung 3 kontaktlos zugeführt werden, sodass es keiner hitze-empfindlichen Kabelverbindung bedarf. Die eigentliche Heizeinrichtung kann dann als Widerstandselement ausgeführt sein. Beide aufgezeigten Möglichkeiten erlauben eine unabhängige Ausgestaltung von der Transorteinrichtung 5. Insbesondere sind beide aufgezeigten Möglichkeiten einfach zu realisieren.

Dabei kann die Heizeinrichtung einzelne Teile der Halterung 3 oder aber die gesamte Halterung 3 erwärmen. Beispielsweise kann die Heizeinrichtung am unteren Ende der Halterung 3 während des Transports mittels der Transporteinrichtung 5 angeordnet sei, sodass aufsteigenden Wärme die Halterung 3 gleichmäßig erwärmt.

Ohne Beschränkung der Allgemeinheit kann diese Vorheizung gesteuert/geregelt oder ungesteuert sein. Eine gesteuerte Heizung kann z.B. zeitgesteuert sein. Eine geregelte Heizung kann durch Vergleich einer Ist-Temperatur mit einem Sollwert bereitgestellt werden, wobei abhängig vom Vergleich die Heizung gesteuert wird.

Beispielsweise kann eine Regelung mittels eines Temperatursensors an der Halterung 3 vorgenommen werden, sodass z.B. in einem optionalen Schritt S550 geprüft wird, ob die Temperatur auf oder unter einen bestimmten Wert, z.B. 200° C, gesunken ist, und wenn ja, in einem Schritt S560 die Heizeinrichtung zugeschaltet wird. Nachfolgend kann die Heizung solange fortgesetzt werden bis die Halterung 3 eine gewünschte Zieltemperatur, z.B. 280° C erreicht hat. Dazu kann in einem optionalen Schritt S650 geprüft werden, ob die Temperatur einen bestimmten Wert, z. B. 280° C, erreicht oder überschritten hat, und wenn ja, wird in einem Schritt S660 die Heizeinrichtung abgeschaltet

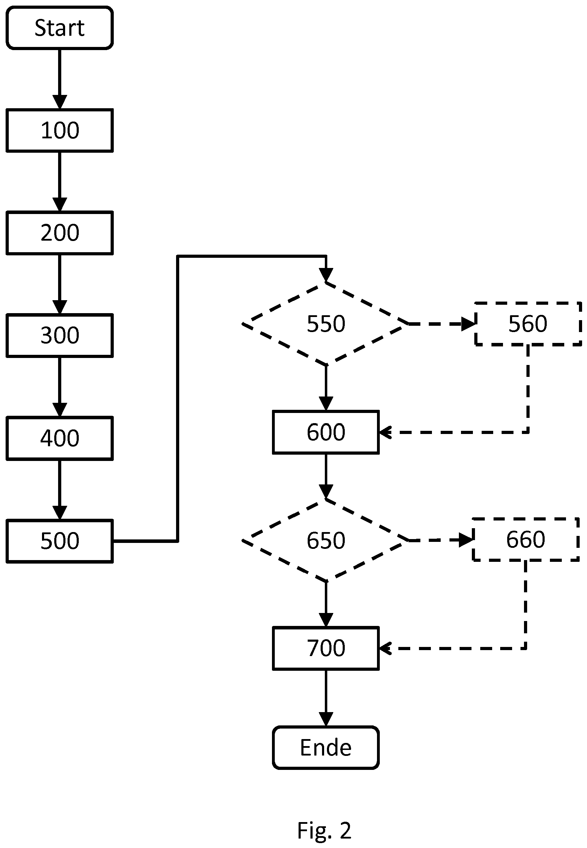

Auch wenn diese Schritte in Figur 2 vor bzw. nach dem Schritt S600 der Rückführung angeordnet sind, ist damit keine Beschränkung verbunden. Vielmehr können die Schritte S550, S560, S650, S660 auch zyklisch zwischen den Schritten S500 und S700 durchlaufen werden.

Durch diese Maßnahme kann der Energieverlust um circa 5 % minimiert werden. D.h. obwohl scheinbar mehr Energie benötigt wird sind die Gesamtenergiebilanz und die Qualitätsbilanz positiv.

In einer Ausgestaltung der Erfindung, die alternativ oder zusätzlich zu Schritten S500 und S700, d.h. dem Anbringen und Entfernen einer thermischen Isolation und/oder alternativ oder zusätzlich zu Schritten S550, S560, S650, S660 ausgeführt werden kann, wird die Halterung 3 mit nur geringer Verweildauer außerhalb des Ofens 1 belassen. Dies kann z.B. mittels einer Transporteinrichtung 5 bewerkstelligt werden, die eine relativ hohe Geschwindigkeit, wie z.B. ein Förderband, lineare Transportschlitten, etc., zur Verfügung stellt.

Besonders vorteilhaft ist es, wenn eine Halterung aus der Nachbarschaft des Ausgangs 11 des Ofens 1 in die Nachbarschaft des Eingangs 10 des Ofens in weniger als 60 Sekunden transportiert wird.

Mit dieser weiteren passiven Maßnahme kann der Energieverlust um circa 5 % minimiert werden. Zudem wird der Beschaffungs- und Erhaltungsaufwand für die Halterungen minimiert, da nunmehr die Anzahl von Halterungen durch Einsatz eines (Hochgeschwindigkeits-) Förderbandes, lineare Transportschlitten, etc. reduziert werden kann.

In allen Ausführungsformen der Erfindung hat es sich als vorteilhaft erwiesen, wenn die Temperatur der Halterung 3 vor dem Eintritt in den Ofen 1 200° C und mehr beträgt. Diese Temperatur kann durch eine Maßnahme oder die Kombination der Maßnahmen erreicht werden.

Durch Kombination der Maßnahmen kann der Energieverbrauch um bis zu 20 % gesenkt werden. Zudem können die Beschaffungskosten als auch die Erhaltungskosten für die Halterungen reduziert werden.

Alle Maßnahmen erlauben (einzeln oder in Kombination) den Energieverlust zu minimieren, Kosten zu senken und die Qualität der erhaltenen gebogenen Glasscheiben zu erhöhen.

### Bezeichnungsliste

- 1: Ofen
- 2, 2': Glasscheibe
- 3: Halterung
- 4: thermische Isolation
- 5: Transporteinrichtung
- 10: Eingang des Ofens
- 11: Ausgang des Ofens

### Verfahrensschritte

- S100: Bereitstellen einer Glasscheibe auf einer Halterung
- S200: Einbringen der gehalterten Glasscheibe in den Eingang des Ofens
- S300: Ausbringen der gebogenen, gehalterten Glasscheibe aus dem Ausgang des Ofens
- S400: Entnahme der gebogenen, gehalterten Glasscheibe von der Halterung
- S500: Anbringen einer thermischen Isolation auf der Halterung
- S550: Prüfen, ob die Temperatur auf oder unter einen bestimmten Wert gesunken ist
- S560: Zuschalten der Heizeinrichtung
- S600: Rückführen der Halterung und der thermischen Isolation
- S650: Prüfen, ob die Temperatur einen bestimmten Werterreicht oder überschritten hat
- S660: Abschalten der Heizeinrichtung
- S700: Entfernen der thermischen Isolation

## Patentansprüche

1. Verfahren zum Biegen einer Glasscheibe (2) in einem Ofen (1), wobei der Ofen einen Eingang (10) und einen Ausgang (11) aufweist, aufweisend die Schritte:
• Bereitstellen (S100) einer Glasscheibe (2) auf einer Halterung (3), wobei die Halterung (3) vorgewärmt ist,
• Einbringen (S200) der gehalterten Glasscheibe (2) in den Eingang (10) des Ofens (1) zum Biegen,
• Ausbringen (S300) der gebogenen, gehalterten Glasscheibe (2') aus dem Ausgang des Ofens (1),
• Entnahme (S400) der gebogenen, gehalterten Glasscheibe (2') von der Halterung (3),
• Anbringen (S500) einer thermischen Isolation (4) auf der Halterung (3),
• Rückführen (S600) der Halterung (3) und der thermischen Isolation (4) mittels einer Transporteinrichtung (5),
• Entfernen (S700) der thermischen Isolation (4) vor einem erneuten Haltern,
• wobei die zuvor bezeichneten Schritte zyklisch erneut durchlaufen werden.

2. Verfahren nach Anspruch 1, **dadurch gekennzeichnet, dass** die Halterung (3) zumindest zeitweise zwischen der Entnahme (S400) der gebogenen, gehalterten Glasscheibe (2') von der Halterung (3) und dem Einbringen (S200) der gehalterten Glasscheibe (2) in den Eingang (10) des Ofens (1) geheizt wird.

3. Verfahren nach Anspruch 1 oder 2, **dadurch gekennzeichnet, dass** die thermische Isolation (4) haubenartig ausgeführt ist und beim Anbringen (S500) der thermischen Isolation (4) über die Halterung (3) gestülpt wird.

4. Verfahren nach einem der vorhergehenden Ansprüche, **dadurch gekennzeichnet, dass** die Halterung aus der Nachbarschaft des Ausgangs (11) des Ofens (1) in die Nachbarschaft des Eingangs (10) des Ofens in weniger als 60 Sekunden transportiert wird

5. Verfahren nach einem der vorhergehenden Ansprüche, **dadurch gekennzeichnet, dass** zumindest zeitweise eine gesteuerte/geregelte oder eine ungesteuerte Heizung der Halterung zwischen der Entnahme (S400) der gebogenen, gehalterten Glasscheibe (2') von der Halterung (3) und dem Einbringen (S200) der bereitgestellten Glasscheibe (2) in den Eingang (10) des Ofens (1) bereitgestellt wird.

6. Verfahren nach einem der vorhergehenden Ansprüche, **dadurch gekennzeichnet, dass** die Temperatur der Halterung (3) vor dem Eintritt in den Ofen 200° C und mehr beträgt.

## Claims

1. Method for bending a glass pane (2) in a furnace (1), wherein the furnace has an inlet (10) and an outlet (11), comprising the steps:
• Providing (S100) a glass pane (2) on a mounting (3), wherein the mounting (3) is preheated,
• Introducing (S200) the mounted glass pane (2) into the inlet (10) of the furnace (1) for bending,
• Discharging (S300) the bent, mounted glass pane (2') out of the outlet of the furnace (1),
• Withdrawing (S400) the bent, mounted glass pane (2') from the mounting (3),
• Installing (S500) thermal insulation (4) on the mounting (3),
• Returning (S600) the mounting (3) and the thermal insulation (4) by means of a transport device (5),
• Removing (S700) the thermal insulation (4) prior to renewed mounting,
• wherein the aforementioned steps are carried out again in a cyclical manner.

2. Method according to claim 1, **characterized in that** the mounting (3) is heated, at least intermittently, between withdrawing (S400) the bent, mounted glass pane (2') from the mounting (3) and introducing (S200) the mounted glass pane (2) into the inlet (10) of the furnace (1).

3. Method according to claim 1 or 2, **characterized in that** the thermal insulation (4) is implemented like a hood and is put over the mounting (3) during the installing (S500) of the thermal insulation (4).

4. Method according to one of the preceding claims, **characterized in that** the mounting is transported out of the vicinity of the outlet (11) of the furnace (1) into the vicinity of the inlet (10) of the furnace in less than 60 seconds.

5. Method according to one of the preceding claims, **characterized in that**, at least intermittently, controlled/regulated or uncontrolled heating of the mounting is provided between withdrawing (S400) the bent, mounted glass pane (2') from the mounting (3) and introducing (S200) the glass pane (2) provided into the inlet (10) of the furnace (1).

6. Method according to one of the preceding claims, **characterized in that** the temperature of the mounting (3) is 200 °C or more before entry into the furnace.

## Revendications

1. Procédé de cintrage d'une plaque de verre (2) dans un four (1), le four présentant une entrée (10) et une sortie (11), le procédé comprenant les étapes suivantes :
• disposer (S100) une plaque de verre (2) sur un support (3), le support (3) étant préchauffé ;
• introduire (S200) la plaque de verre (2) supportée dans l'entrée (10) du four (1) pour le cintrage ;
• sortir (S300) la plaque de verre supportée, cintrée (2') de la sortie du four (1) ;
• prélever (S400) la plaque de verre supportée, cintrée (2') à partir du support (3) ;
• appliquer (S500) une isolation thermique (4) sur le support (3) ;
• ramener (S600) le support (3) et l'isolation thermique (4) au moyen d'un dispositif de transport (5) ;
• retirer (S700) l'isolation thermique (4) avant une nouvelle disposition de plaque de verre sur le support ;
• les étapes mentionnées ci-dessus étant de nouveau effectuées de manière cyclique.

2. Procédé selon la revendication 1, **caractérisé par le fait que** le support (3) est chauffé au moins par moments entre le prélèvement (S400) de la plaque de verre supportée, cintrée (2') à partir du support (3) et l'introduction (S200) de la plaque de verre (2) supportée dans l'entrée (10) du four (1).

3. Procédé selon l'une des revendications 1 ou 2, **caractérisé par le fait que** l'isolation thermique (4) est réalisée en calotte et est enfoncée sur le support (3) lors de l'application (S500) de l'isolation thermique (4).

4. Procédé selon l'une des revendications précédentes, **caractérisé par le fait que** le support est transporté du voisinage de la sortie (11) du four (1) au voisinage de l'entrée (10) du four en moins de 60 secondes.

5. Procédé selon l'une des revendications précédentes, **caractérisé par le fait qu'**au moins par moments un chauffage commandé/régulé ou un chauffage non commandé du support est prévu entre le prélèvement (S400) de la plaque de verre supportée, cintrée (2') à partir du support (3) et l'introduction (S200) de la plaque de verre (2) supportée dans l'entrée (10) du four (1).

6. Procédé selon l'une des revendications précédentes, **caractérisé par le fait que** la température du support (3) avant l'entrée du four est d'au moins 200°C.
